# EUROPÄISCHE PATENTANMELDUNG

(11) **EP 2 192 459 A1**
(43) Veröffentlichungstag der Anmeldung: **02.06.2010**
(21) Anmeldenummer: 09013888.4
(22) Anmeldetag: 05.11.2009
(51) Int. Cl.: G05B 19/042, G05B 19/409, G05D 23/19, G06F 3/048

(54) **Bedienungseinheit für die Gebäudeautomation**

(30) Priorität: 05.11.2008 DE 102008055996; 29.01.2009 DE 102009006612
(71) Anmelder: WILO SE, 44263 Dortmund (DE)
(72) Erfinder: Kettner, Thorsten, 45711 Datteln (DE); Polkehn, Knut, 12489 Berlin (DE)
(74) Vertreter: COHAUSZ DAWIDOWICZ HANNIG & SOZIEN

(57) **Zusammenfassung**

Die Erfindung betrifft eine Bedieneinheit (1) zur Steuerung eines Gerätes, einer Anlage und/ oder eines Prozesses in der Gebäudeautomation, mit einem Bedienelement (3) und mit einer Anzeige (2), auf der ein Wert (4b) einer ersten Größe (4a) dargestellt ist. Die Bedieneinheit (1) ist dazu eingerichtet, durch eine Betätigung des Bedienelements (3) die Darstellung des Werts (4b) der ersten Größe (4a) zu vergrößern.

## Beschreibung

Die Erfindung betrifft eine Bedieneinheit zur Steuerung eines Gerätes, einer Anlage und/oder eines Prozesses in der Gebäudeautomation, mit einem Bedienelement und mit einer Anzeige, auf der ein erster Wert einer ersten Größe des Gerätes, der Anlage und/oder des Prozesses dargestellt ist.

Bei Bedieneinheiten für die Gebäudeautomation ist es notwendig, Parameterwerte für Geräte und/oder Prozessparameter vorzugeben, um ein bestimmtes Gerät, beispielsweise einen Aktor, oder einen Prozess, beispielsweise eine Raumtemperatur, zu steuern oder zu regeln. Bei einer Bedieneinheit kann es sich beispielsweise um ein Raumtemperaturregelgerät handeln, häufig als Raumthermostat bezeichnet, welches zur Regelung einer Raumtemperatur eines Raumes eingerichtet ist. Derartige Raumthermostate, unter denen solche im klassischen Sinn mit einem Bimetall, Ausführungen mit Drehpotentiometer oder anderen elektrischen Bedienelementen zur Einstellung einer Solltemperatur und auch komplexe Lösungen für eine Raumtemperaturregelung verstanden werden, umfassen häufig einen Messfühler zur Erfassung der Raumtemperatur oder erhalten ein externes Signal über eine Raumisttemperatur und wirken auf einen Aktor eines Wärmetauschers ein, beispielsweise einem Stellventil oder einer dezentralen Pumpe eines Heizkörpers oder einer Kühleinrichtung. Der vorgebbare Parameterwert stellt einen Sollwert dar, der innerhalb der Steuerung oder Regelung des Gerätes, der Anlage und/oder des Prozesses bei diesem erreicht, bzw. konstant gehalten werden soll.

Für die Einstellung des Parameterwertes ist es notwendig, in dem Steuerprogramm ein Menü aufzurufen innerhalb welchem der Parameterwert vorgegeben werden kann. Um in das Einstellungsmenü zu gelangen, sind mehrere Bedienschritte erforderlich, bis das notwendige Einstellungsmenü auf einem Display der Bedieneinheit angezeigt wird. Wünscht der Anwender einen Sollparameterwert zu verändern, ist es erforderlich, das Konfigurationsmenü des Steuerprogramms anzuwählen, das entsprechende Einstellungsmenü aufzurufen und dort den Sollparameterwert zu verändern. Dies ist zeitaufwendig und erfordert für den Bedienenden die Kenntnisnahme der Menüstruktur, um in das Einstellungsmenü zu gelangen. Der Einstellungsvorgang ist daher vergleichsweise komplex und ermöglicht keine intuitive Bedienung der Bedieneinheit.

Weiterhin ist bei diesen Bedieneinheiten nachteilig, dass während der Einstellung des Sollparameterwerts der diesem zugeordnete Istparameterwert der zu steuernden oder zu regelnden physikalischen Größe unbekannt ist bzw. bleibt.

Eine Möglichkeit, diesen Nachteil zu überwinden, besteht darin, den Soll- und den Istparameterwert gleichzeitig auf dem Display darzustellen. Ein Display besitzt jedoch eine in den Abmessungen und Darstellungsmöglichkeiten beschränkte Anzeigefläche, so dass zur Widergabe zweier Werte gleichzeitig entweder zwei Displays verwendet werden müssen oder die Darstellung beider Werte auf einem Display klein gewählt werden muss. Die Verwendung von zwei Displays führt zu dem Nachteil, dass ein weiteres Bauteil respektive ein weiterer Displaycontroller benötigt wird. Dies bedingt höhere Kosten und eine konstruktiv aufwändigere Bedieneinheit. Es erfordert weiterhin einen zusätzlichen Programmieraufwand und erhöht aufgrund der zusätzlich benötigten Komponenten das Fehlerrisiko. Eine kleine Darstellung der Werte ist weiterhin entweder aufgrund der Pixelung des Displays gar nicht möglich oder die Werte müssen derart klein gewählt werden, dass sie insbesondere aus größerer Entfernung kaum erkennbar sind.

Aufgabe der vorliegenden Erfindung ist es daher, eine Bedieneinheit zur Verfügung zu stellen, die eine besonders einfache und intuitive Bedienung bei der Vorgabe von Werten für die Steuerung eines Gerätes, einer Anlage und/oder eines Prozesses in der Gebäudeautomation ermöglicht und die gleichzeitig eine gute Ablesbarkeit desjenigen Wertes gewährleistet, der für den Bedienenden aktuell von höherer Bedeutung ist, wobei die Bedieneinheit Teil der Gebäudeautomation sein soll.

Diese Aufgabe wird durch eine Bedieneinheit mit den Merkmalen des Anspruchs 1 gelöst. Vorteilhafte Weiterbildungen der Erfindung sind in den Unteransprüchen aufgeführt und werden nachfolgend erläutert. Die Merkmale der Unteransprüche können für sich betrachtet aber auch in Kombination miteinander in einer Ausführungsvariante der erfindungsgemäßen Bedieneinheit verwirklicht sein.

Erfindungsgemäß wird eine Bedieneinheit zur Steuerung eines Gerätes, einer Anlage und/oder eines Prozesses für die Gebäudeautomation vorgeschlagen, die ein Bedienelement und eine Anzeige umfasst, auf der ein erster Wert einer ersten Größe, insbesondere eines Parameter oder einer physikalischen Größe des Gerätes, der Anlage und/oder des Prozesses, dargestellt ist, wobei die Bedieneinheit dazu eingerichtet ist, durch eine Betätigung des Bedienelements die Darstellung des Werts der ersten Größe zu vergrößern.

Dies hat den Vorteil, dass der angezeigte Wert im Falle eines Wunsches betreffend die Änderung dieses Werts durch die Vergrößerung der Darstellung gegenüber anderen Angaben auf der Anzeige in den Vordergrund rückt und damit für den Bedienenden einerseits besser lesbar wird, andererseits die Konfiguration der Bedieneinheit angenehmer wird. Ein navigieren in Einstellungsmenüs der Bedieneinheit entfällt.

Weiterhin kann auf der Bedieneinheit ein Wert einer zweiten Größe dargestellt sein, wobei die Bedieneinheit dazu eingerichtet sein kann, durch die Betätigung des Bedienelements die Darstellung des Werts der zweiten Größe zu verkleinern.

Dieser Weiterbildung liegt die Idee zu Grunde, zwei Werte von physikalischen Größen und/ oder Parametern gleichzeitig auf der Bedieneinheit, vorzugsweise auf demselben Display anzuzeigen, wobei die Abmessungen, d.h. die Größen der schriftbildlichen Darstellungen der Werte, zunächst gleich oder unterschiedlich sind. Sind die Darstellungen der Werte gleich groß, kommt hierdurch zum Ausdruck, dass die Werte aus subjektiver Sicht aktuell denselben Bedeutungsgrad für den Benutzer besitzen. Ist die Darstellung des Werts der zweiten Größe größer als der Wert der ersten Größe, kommt hierdurch zum Ausdruck, dass der Wert der zweiten Größe aktuell einen höheren Bedeutungsgrad für den Benutzer besitzt. Durch die Vergrößerung des Wertes der ersten Größe und die Verkleinerung des Wertes der zweiten Größe wird der Bedeutungsgrad zwischen den Größen dahingehend geändert, dass der Wert der ersten Größe für den Bedienenden aktuell eine höhere Bedeutung bekommt als der Wert der zweiten Größe, weil der Bedienende den Wert der ersten Größe gegebenenfalls ändern möchte. Es wird folglich das Ziel verfolgt, dass stets derjenige Wert, der für den Anwender zu einem bestimmten Zeitpunkt von größerer Bedeutung ist, größer dargestellt ist, als der andere Wert.

Vorzugsweise kann vorgesehen sein, dass der Wert einer ersten Größe eines im Rahmen einer Gebäudeautomationstechnik gesteuerten oder geregelten Gerätes, einer Anlage und/oder eines Prozesses, die für den Anwender von geringerer Bedeutung ist, vergleichsweise klein auf dem Display der Bedieneinheit in dessen "Stand-By-Betrieb" angezeigt ist, wohingegen der Wert einer zweiten Größe im Verhältnis zum ersten Wert im "Stand-By- Betrieb" der Bedieneinheit vergrößert dargestellt ist. Unter dem "Stand-By-Betrieb" wird eine Betriebsart verstanden, bei der sich eine erfindungsgemäße Bedieneinheit im Bereitschaftsmodus befindet und jederzeit durch Betätigung eines Bedienelementes aktiviert werden kann, so dass anschließend spezifische Einstellungen vornehmbar sind. wobei dieser Bereitschaftsmodus nicht unbedingt bedeutet, dass die Anzeige der Bedieneinheit leer ist. Vorliegend ist der Bereitschaftsmodus mit einem Anzeigemodus verknüpft. Für den Anwender ist im Stand-By-Betrieb der Wert der zweiten Größe von höherer Bedeutung als der Wert der ersten Größe und kann vom Anwender auf der Bedieneinheit aufgrund seiner größeren Darstellung unmittelbar und von größerer Entfernung wahrgenommen werden.

In der Ausführung der erfindungsgemäßen Bedieneinheit mit zwei auf der Anzeige dargestellten Werten kann vorgesehen sein, dass der Wert der zweiten Größe in seinen Abmessungen im Verhältnis zum ersten Wert vergrößert dargestellt ist, wobei die Bedieneinheit dazu eingerichtet sein kann, durch die Betätigung des Bedienelements die Größenverhältnisse der beiden Werte zu vertauschen. Dies bedeutet, dass nach Betätigung des Bedienelements der Wert der ersten Größe im Verhältnis zum Wert der zweiten Größe größer dargestellt ist und für eine vorbestimmte Zeitspanne nach der Betätigung des Bedienelementes in dieser Größe dargestellt bleibt. Auf diese Weise kann nunmehr der Wert der ersten physikalischen Größe unmittelbar auf der Bedieneinheit insbesondere schon von Weitem wahrgenommen werden.

Die Darstellung zweier Werte unterschiedlicher Abmessungen, d.h. die kleinere Darstellung des einen Werts gegenüber dem anderen Wert hat des Weiteren den Vorteil, dass die Werte auf einem einzigen, insbesondere einem grafischen Display dargestellt werden können, ohne dass es zu einer Einschränkung der Ablesbarkeit der dargestellten Werte kommt. Denn ein Display besitzt nur eine begrenzte grafische Darstellbarkeit und bietet daher in der Regel keinen ausreichenden Platz für das gleichzeitige Anzeigen zweier Werte in großen Zeichen derart, dass beide Werte bereits von Weitem, insbesondere in einem Abstand von mehreren Metern wahrgenommen werden können. Die Bedieneinheit kann daher mit einem einzigen, insbesondere graphischen Display ausgebildet sein, auf dem die beiden Werte gemeinsam dargestellt sind. Dies hat den Vorteil, dass die Bedieneinheit konstruktiv einfach ausgebildet sein kann. Zusätzliche Bauelemente, insbesondere ein zweites Display und ein entsprechender zweiter Display-Controller können dadurch eingespart werden. Weiterhin hat die Verwendung eines graphischen Displays den Vorteil, dass die Positionierung des ersten und des zweiten Werts auf dem Display besonders flexibel gewählt bzw. programmiert werden kann.

In einer alternativen Ausführungsform der Erfindung kann vorgesehen sein, dass auf der Bedieneinheit ein Wert einer zweiten Größe dargestellt ist, wobei die Bedieneinheit derart eingerichtet ist, dass durch die Betätigung des Bedienelements der Wert der zweiten Größe verschwindet. Dies ist insbesondere dann vorteilhaft, wenn die zweite Größe zu einem bestimmten Zeitpunkt gänzlich unbedeutend wird, so dass es für den Bedienenden nicht mehr erforderlich ist, dass der Wert auf der Anzeige dargestellt ist.

In einer vorteilhaften Weiterbildung kann die Bedieneinheit derart eingerichtet sein, dass durch die Betätigung des Bedienelements ein Wert einer dritten Größe auf der Bedieneinheit erscheint, der im Verhältnis zum Wert der ersten Größe kleiner dargestellt ist. Vorzugsweise wird durch die Betätigung des Bedienelements der Wert der zweiten Größe durch den Wert der dritten Größe ersetzt, wodurch ein Größen- oder Parameterwechsel bewirkt wird.

Die Bedieneinheit kann weiterhin derart eingerichtet sein, dass der Wert der ersten Größe nach der Betätigung des Bedienelements horizontal und/ oder vertikal in etwa der Mitte der Anzeige positioniert ist. Zusätzlich kann vorgesehen sein, dass der zweite Wert vor der Betätigung des Bedienelements in etwa dieser Mitte der Anzeige und der erste Wert am Rand der Anzeige insbesondere oberhalb des zweiten Werts positioniert ist. Damit ist der zweite Wert, der im "Stand-By-Betrieb" der Bedieneinheit größer als der erste Wert dargestellt sein kann, im Wesentlichen zentral auf der Anzeige dargestellt und unmittelbar einsehbar. Aufgrund der unterschiedlichen Positionierung der beiden Werte wird deren unterschiedlicher Bedeutungsgrad zusätzlich betont. Insbesondere zeigt ein zentral auf der Anzeige positionierter Wert im Verhältnis zu einem am Rand positionierten Wert eine höhere Bedeutung dieses Wertes an. Im "Stand-By-Betrieb" der Bedieneinheit kommt daher zum Ausdruck, dass der zentral dargestellte Wert der zweiten Größe für den Anwender aktuell von höherer Bedeutung ist als der am Rand der Anzeige dargestellte Wert der ersten Größe.

In einer vorteilhaften Weiterbildung der Erfindung kann vorgesehen sein, dass durch die Betätigung des Bedienelements die Positionen der angezeigten Werte wechseln, d.h. getauscht werden. Dies bedeutet, dass der zunächst zentral auf der Anzeige dargestellte zweite Wert nach Betätigung des Bedienelements am Rand der Anzeige positioniert ist und der ehemals am Rand der Anzeige dargestellte erste Wert in etwa der Mitte der Anzeige dargestellt ist. Unter der Mitte der Anzeige wird erfindungsgemäß eine Ausrichtung bezüglich der horizontalen und/ oder vertikalen Mitte der Anzeige verstanden. Durch die Betätigung des Bedienelements kann somit sowohl ein Wechsel der Größenverhältnisse als auch ein Positionswechsel bei den beiden dargestellten Werten herbeigeführt werden. Hierdurch wird zum Ausdruck gebracht, dass nach der Betätigung des Bedienelements der Wert der ersten physikalischen Größe für den Anwender von höherer Bedeutung ist als der Wert der zweiten physikalischen Größe.

Vorzugsweise kann die Abmessung des zweiten Werts gegenüber dem ersten Wert im "Stand-By-Betrieb" respektive die Abmessung des ersten Werts gegenüber dem zweiten Wert nach der Betätigung des Bedienelements die 1,2-fache bis 4-fache, vorzugsweise 2-fache Größe der Darstellung des jeweiligen anderen Werts aufweisen.

Besonders vorteilhaft ist es, wenn die dargestellten Werte die physikalische Einheit der jeweiligen physikalischen Größe umfassen. Auf diese Weise kann der Anwender dem dargestellten Wert unmittelbar eine konkrete Bedeutung zuordnen.

Der Kerngedanke der Erfindung kann auf beliebige Größen, insbesondere physikalische Größen, Parameter für die Programmsteuerung sowie textliche und/ oder bildliche Hinweise angewendet werden, die für den Anwender im Rahmen der Steuerung des Gerätes, der Anlage und/ oder des Prozesses von Bedeutung sind, wobei den Größen unterschiedliche Bedeutungsgrade zugeordnet werden, die sich in der Positionierung und den Abmessungen der Werte der Größen niederschlagen. Ein besonders vorteilhaftes Anwendungsfeld ist es, wenn die zweite Größe, eine physikalische Größe in Gestalt eines Messwerts ist. Ein derartiger Messwert kann den aktuellen Zustand des gesteuerten oder geregelten Gerätes, der Anlage und/oder Prozesses für den Anwender wiedergeben und ihn über diesen Zustand informieren. Vorzugsweise kann die zweite Größe ein Istwert innerhalb einer Regelung sein. Da der Istwert der Regelgröße den aktuellen Zustand eines Gerätes, der Anlage und/oder Prozesses wiedergibt, wird dem Anwender dieser Zustand durch die zentrale Positionierung des Istwertes auf der Anzeige und dessen große Darstellung im "Stand-By-Betrieb" der Bedieneinheit direkt vermittelt. Er kann dadurch beurteilen, ob ein Eingriff in die Steuerung vorgenommen werden muss.

In einer bevorzugten Weiterbildung der Erfindung kann die erste Größe ein veränderbarer Parameter innerhalb eines Steuerprogramms sein. Insbesondere kann die erste Größe ein vorgebbarer Sollwert für die Steuerung bzw. Regelung sein. Die beiden auf der Anzeige dargestellten Werte der Größen gehören damit als Soll- und Istwert funktional und logisch zusammen. Die Ausgestaltung der ersten physikalischen Größe als vorgebbarer Sollwert hat den Vorteil, dass der Anwender nicht in einer komplizierten Menüstruktur ein Einstellungsmenü aufsuchen und aufrufen muss, um einen gewünschten Wert einzustellen. Durch die Betätigung des Bedienelements wird der "Stand-By-Betrieb" der Bedieneinheit unterbrochen, der angezeigte Wert des vorgebbaren Sollwerts wechselt von seiner kleinen Darstellung am Rand der Anzeige in eine vergrößerte Darstellung in der Mitte der Anzeige und kann dort individuell verändert und durch Bestätigung des veränderten Werts dem Steuerprogramm vorgegeben werden. Auf diese Weise können die wichtigsten Größen innerhalb einer Steuerung bzw. Regelung eines Gerätes, einer Anlage und/oder eines Prozesses, nämlich ein vorgebbarer Sollwert und ein hierzu entsprechender Istwert, eingestellt bzw. überwacht werden.

Die Bedieneinheit kann zur Steuerung oder Regelung beliebiger physikalischer Größen verwendet werden. Es sei angemerkt, dass im Sinne der Erfindung der Begriff "Steuerung" als Oberbegriff für jegliche Art der Einflussnahme auf eine physikalische Größe eines Gerätes, einer Anlage und/oder Prozesses verstanden wird, wobei der Begriff "Steuerung" auch eine "Regelung" umfasst, da eine Regelung eine Steuerung mit einer Rückkopplung der gesteuerten Größe ist. Erfindungsgemäß können beliebige physikalische Größen durch die Bedieneinheit gesteuert respektive geregelt werden, beispielsweise die Drehzahl einer Pumpe, die Leistung eines Elektromotors oder einer Beleuchtungseinheit oder der Temperatur eines Raumes.

Für den letztgenannten Fall kann die zweite Größe ein gemessener TemperaturIstwert und die erste Größe ein vorgebbarer Temperatur-Sollwert innerhalb einer Raumtemperaturregelung sein. Der Raumtemperatur-Istwert ist demgemäß im "Stand-By-Betrieb" der Bedieneinheit zentral auf dem Display in großer Darstellung angezeigt, so dass die Raumtemperatur in komfortabler Weise von der Bedieneinheit auch von Weitem abgelesen werden kann. Zusätzlich wird auf der Anzeige der Bedieneinheit der Sollwert für die Raumtemperatur am Rand der Anzeige in kleinerem Schriftzug dargestellt, da er für den Anwender für die überwiegende Zeit von untergeordneter Bedeutung ist. Die Darstellung des Raumtemperatursollwerts informiert den Anwender jedoch unmittelbar über den Wert des eingestellten Prozessparameters, ohne dass er in einem Untermenü nachsehen muss, auf welchen Temperatursollwert die Bedieneinheit regelt.

Möchte der Anwender nunmehr die Raumtemperatur verändern, so braucht er nicht in der Menüstruktur des Steuerprogramms nach einem entsprechenden Einstellungsmenü zu suchen. Vielmehr genügt eine einzige, kurze Betätigung des Bedienelements. Dies bewirkt, dass der Temperatursollwert nunmehr in großem Schriftzug zentral auf dem Display dargestellt und von dem Anwender gemäß seinem individuellen Temperaturwunsch eingestellt werden kann. Durch die Betätigung des Bedienelementes wird die Bedieneinheit folglich aus dem Stand-By-Betrieb geholt und in den aktiven Einstellungsbetrieb versetzt. Durch den Wechsel der Größenverhältnisse und der Positionen der dargestellten Werte ist nunmehr der Temperatursollwert für den Anwender von höherer Bedeutung als der Temperaturistwert des gesteuerten bzw. geregelten Gerätes und/oder Prozesses.

Bezogen auf den beispielhaft dargestellten Prozess einer Raumtemperaturregelung kann die Bedieneinheit vorzugsweise als Raumthermostat ausgebildet sein. Insbesondere kann sie innerhalb eines Raumes, dessen Temperatur geregelt werden soll, montiert respektive aufgehängt sein und einen Temperaturmessfühler aufweisen, der den auf der Anzeige wiedergegebenen Temperaturistwert bereitstellt.

Das Raumbediengerät kann als "Low-Cost" Variante ausgebildet sein, wobei die Raumtemperaturregelung von einer übergeordneten Mastereinheit durchgeführt wird und die Bedieneinheit lediglich Eingabe- und Anzeigefunktionen besitzt und ausübt. Eingegebene bzw. angezeigte Werte von Größen können an die Mastereinheit übertragen bzw. von dieser erhalten werden. Alternativ kann die Bedieneinheit einen Speicher, in dem ein parametrierbares Steuerprogramm gespeichert ist und einen Mikroprozessor zur Ausführung des Steuerprogramms aufweisen und damit selbst ein Element innerhalb des Raumtemperaturregelkreises sein.

In einer besonders vorteilhaften Weiterbildung der Erfindung kann die Bedieneinheit dazu eingerichtet sein, dass nach einer vorbestimmten Zeit der Nichtbedienung des Bedienelements die durch die Betätigung des Bedienelements bewirkten Änderungen auf der Anzeige zurückwechseln. Insbesondere können die Größenverhältnisse der Werte, die Positionen und/ oder die ausgetauschten Größen wieder zurückwechseln. Dies bedeutet, dass die Bedieneinheit von dem aktiven Status, in dem der erste Wert der physikalischen Größe verändert werden kann, zum "Stand-By-Betrieb" zurückkehrt. Es kann dann wieder der Wert der zweiten Größe auf der Anzeige im Verhältnis zum Wert der ersten Größe vergrößert angezeigt sein.

Vorzugsweise kann auch vorgesehen sein, dass nach einem vorbestimmten, insbesondere dem selben Zeitraum der Nichtbetätigung des Bedienelements die Positionen der Werte zurückwechseln. Das heißt, dass der Wert der ersten Größe von seiner Darstellung in zentraler Position auf dem Display zurückwechselt zu einer Darstellung am Rand desselben und der Wert der zweiten Größe wieder zentral in etwa der Mitte der Anzeige dargestellt wird.

Das automatische Zurückwechseln hat den Vorteil, dass ein manuelles, explizites Abbrechen des Bedienvorganges durch den Anwender nicht notwendig ist, um die Bedieneinheit in den "Stand-By-Betrieb" zu versetzen.

Alternativ oder zusätzlich kann ein automatisches Zurückwechseln der Größenverhältnisse und/ oder Positionen der Werte dann erfolgen, wenn eine Wertänderung an der Bedieneinheit bestätigt wird. Weiterhin kann als dritte Möglichkeit ein Zurückspringen der Größenverhältnisse und/ oder der Positionen der Werte dann erfolgen, wenn der Bedienvorgang manuell durch den Anwender abgebrochen wird.

Vorzugsweise können die Parameterwerte in numerischen Zahlenwerten dargestellt sein. Alternativ kann auch eine Darstellung in graphischen Symbolen erfolgen, beispielsweise in Gestalt eines zumindest teilweise gefüllten Balkens, eines Schiebebalkens oder einer bestimmten Anzahl von Piktogrammen. Dies hat den Vorteil, dass neben dem aktuellen Wert auch Parametergrenzen vermittelt werden können. Beispielsweise würde ein zur Hälfte gefüllter Balken anzeigen, dass sich der Wert eines Parameters in der Mitte eines einstellbaren Parameterbereichs befindet.

Besonders vorteilhaft ist es, wenn durch die Betätigung des Bedienelements eine Beleuchtung der Anzeige eingeschaltet wird. Hierdurch wird die Ablesbarkeit der auf der Anzeige dargestellten Werte bei schlechten Lichtverhältnissen verbessert. Weiterhin kann die Bedieneinheit dazu eingerichtet sein, durch eine erste Betätigung des Bedienelements eine Beleuchtung der Anzeige einzuschalten und erst durch eine weitere Betätigung des Bedienelements eine Änderung des oder der angezeigten Werte der Größen, wie zuvor beschrieben, zu bewirken. Damit wird vermieden, dass in dem Falle, dass ein Bedienender bei schlechten Lichtverhältnissen zunächst nur die Beleuchtung der Anzeige aktivieren möchte, die Bedieneinheit nicht sofort in einen Eingabemodus wechselt, und die Raumtemperaturanzeige dadurch verschwindet und kleiner wird.

Es sei angemerkt, dass die Erfindung nicht auf die beschriebene Ausführung mit einer Darstellung von zwei physikalischen Größen auf der Bedieneinheit beschränkt ist. Vielmehr kann in einer weiteren Ausführungsvariante der Erfindung auch ein dritter Wert einer dritten Größe oder zusätzlich sogar ein vierter Wert einer vierten Größe angezeigt sein, wobei die Darstellung des dritten und vierten Werts gegenüber der Darstellung des zweiten Werts zumindest im "Stand-By-Betrieb" verkleinert ist.

Durch die Betätigung des Bedienelements können die Abmessungen und vorzugsweise auch die Position des Werts der zweiten Größe mit der Größe respektive der Position eines der anderen Werte vertauscht werden. Vorzugsweise kann vorgesehen sein, dass eine zyklische Vertauschung der Werte durch Betätigung des Bedienelementes erfolgt. Alternativ kann der Wert der weiteren Größe auch gleich dem Wert der ersten Größe behandelt werden, d.h. durch Betätigung des Bedienelements in seiner Darstellung vergrößert und zusätzlich gegebenenfalls in seiner Position in etwa die Mitte der Anzeige neben den Wert der ersten Größe gewechselt werden.

Weitere Vorteile und Ausgestaltungen der Erfindung, können der nachfolgenden Beschreibung von Ausführungsbeispielen anhand der beigefügten Figuren entnommen werden.

Es zeigen:
- Figur 1:: Bedieneinheit mit zwei angezeigten Werten im Stand-By-Betrieb
- Figur 2:: Bedieneinheit gemäß Figur 1 im aktiven Betrieb
- Figur 3:: Bedieneinheit mit drei angezeigten Werten im Stand-By-Betrieb
- Figur 4:: Bedieneinheit gemäß Figur 3 im aktiven Betrieb, zyklisch vertauschte Werte
- Figur 5:: Bedieneinheit mit drei angezeigten Werten im Stand-By-Betrieb
- Figur 6:: Bedieneinheit gemäß Figur 5 im aktiven Betrieb

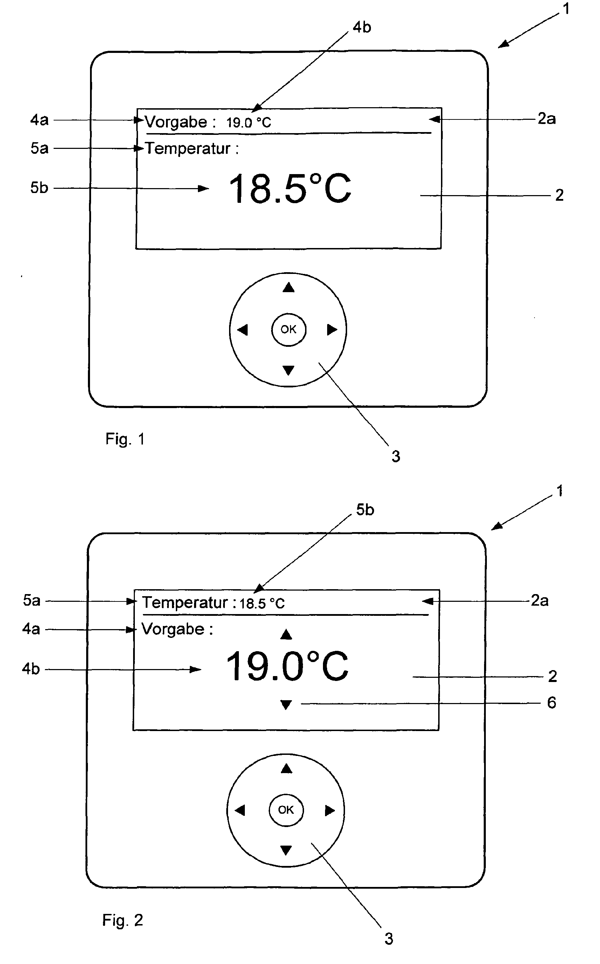

Figur 1 zeigt eine als Raumthermostat ausgebildete Bedieneinheit 1 zur Regelung einer Raumtemperatur. Die Raumtemperaturregelung stellt einen physikalischen Prozess dar, der gemäß einer vorgegebenen Solltemperatur geregelt werden soll. Die Regelung der Raumtemperatur erfolgt durch die Steuerung eines oder mehrer Stellglieder eines oder mehrerer Heizkörper innerhalb des Raumes. Ein Stellglied kann dabei ein elektromotorisch einstellbares Ventil oder eine dezentrale Pumpe sein, die an dem Heizkörper oder in einer Leitung zu oder von diesem angeordnet ist. Die Stellglieder sind Aktoren, die zusammen mit dem Raumthermostat Bestandteile einer Gebäudeautomation darstellen.

Die in Figur 1 dargestellte Bedieneinheit 1 umfasst einen nicht dargestellten Speicher, in dem ein parametrierbares Steuerprogramm gespeichert ist, sowie einen nicht dargestellten Mikroprozessor zur Ausführung dieses Steuerprogramms. Mittels eines Bedienelements 3 können einzelne Parameter des Steuerprogramms wie Solltemperatur und/ oder Nachtabsenkung "aktiv/ deaktiviert" eingestellt werden. Vorzugsweise kann es sich dabei um eine vorgebbare Temperatur handeln, auf die die Raumtemperatur geregelt werden soll. Dieser Parameter stellt eine erste Größe 4a im Sinne der Erfindung dar, deren Wert 4b auf einer Anzeige 2 der Bedieneinheit 1 dargestellt ist. Die Darstellung des Wertes 4b des Parameters 4a erfolgt im oberen Bereich 2a der Anzeige 2. Die Anzeige 2 ist als graphisches Display ausgebildet.

Auf dem Display 2 ist etwa zentriert zu der horizontalen und vertikalen Mitte des Displays 2 der Wert 5b einer zweiten Größe 5a dargestellt, die in diesem Ausführungsbeispiel eine gemessene Isttemperatur des Raumes darstellt. Dieser Istwert 5b ist im Verhältnis zu dem Wert 4b der Sollwertvorgabe vergrößert dargestellt, so dass er auf dem Display 2 besonders gut sichtbar ist und deutlich gegenüber dem oberhalb des Istwerts 5b dargestellten Sollwert 4b hervortritt. In dem in Figur 1 gezeigten "Stand-By-Betrieb" der Bedieneinheit 1 erfüllt diese in erster Linie die Eigenschaft einer Raumtemperaturanzeige. Dadurch ist der Bedienende in der Lage, bei Betreten des Raumes dessen Isttemperatur auf den ersten Blick zu erkennen. Ferner kann er auf den zweiten Blick auch die eingestellte Solltemperatur erkennen und bei Bedarf ändern und somit in die Raumtemperaturregelung eingreifen.

Wird nunmehr bei Änderungsbedarf das Bedienelement 3 betätigt, wechseln sowohl die Größenverhältnisse als auch die Positionen der beiden Werte 4b, 5b auf dem Display 2. Der Zustand der Bedieneinheit 1 nach der Betätigung des Bedienelements 3 ist in Figur 2 dargestellt. Die Isttemperatur 5b wird nunmehr im oberen Bereich 2a des Displays 2 in kleinem Schriftzug dargestellt, wohingegen die Sollwerttemperatur 4b für die Raumtemperaturregelung im Verhältnis zur Isttemperatur 5b größer und etwa mittig im Display 2 dargestellt ist. Zusätzlich sind im Display 2 Navigationssymbole 6 erschienen, die dem Anwender anzeigen, dass der groß dargestellte Temperaturwert 4b im Display 2 verändert werden kann. Weiterhin zeigen die Navigationssymbole 6, mit welchen Bedientasten des Bedienelements 3 eine Erhöhung bzw. Reduzierung des Wertes 4b der Sollwertvorgabe 4a herbeigeführt werden kann.

Sowohl die vorgebbare Raumtemperatur 4b als auch die gemessene Raumisttemperatur 5b sind in numerischen Zahlenwerten gefolgt von der physikalischen Einheit der Temperatur auf dem Display 2 dargestellt.

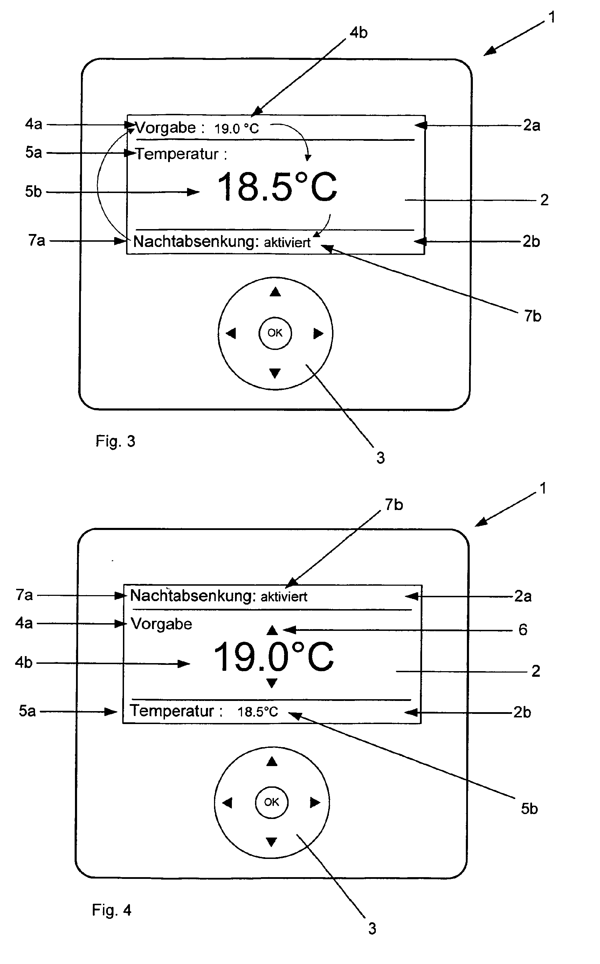

Figur 3 zeigt eine alternative Ausführungsvariante der Erfindung umfassend die Darstellung von drei Werten 4b, 5b, 7b dreier verschiedener Größen 4a, 5a, 7a gemeinsam auf dem Display 2. Der Wert 4b einer ersten Größe 4a ist hierbei im oberen Bereich 2a des Displays, der Wert 5b einer zweiten Größe 5a in der Mitte des Displays 2 und der Wert 7b einer dritten Größe 7a im unteren Bereich 2b des Displays dargestellt. Der Wert 5b der zweiten Größe 5a ist gegenüber den anderen Werten groß dargestellt und damit gegenüber diesen auf dem Display 2 hervorgehoben, so dass er von Weitem unmittelbar erkannt werden kann.

Gegenüber der Darstellung in Figur 1 unterscheidet sich die Bedieneinheit 1 nach Figur 3 folglich in der Darstellung des dritten Wertes 7b einer dritten Größe 7a auf dem Display 2. Diese Größe stellt einen weiteren Parameter innerhalb des Steuerprogramms dar, der vom Anwender eingestellt werden kann. Beispielhaft ist in Figur 3 angegeben, dass dieser Parameter eine Nachtabsenkung betrifft, deren Wert 7b "aktiviert" oder "deaktiviert" sein kann. Bei der Nachtabsenkung handelt es sich um eine Steuerungsoption bei einer Heizungsanlage, bei deren Aktivierung die Vorlauftemperatur der Zentralheizung in den Nachtstunden reduziert wird. In Figur 3 ist der Parameterwert 7b dieses dritten Parameters 7a als "aktiviert" wiedergegeben.

Wird das Bedienelement 3 betätigt, erfolgt ein zyklisches Vertauschen der im Display 2 dargestellten Werte 4b, 5b, 7b, was durch die bogenförmigen Pfeile in Figur 3 zum Ausdruck kommt. Durch ein erstes Betätigen des Bedienelements 3 wird der erste Wert 4a vom oberen Bereich 2a des Displays 2 in den mittleren Bereich bewegt und in großem Schriftzug dargestellt. Gleichzeitig wird der zweite Parameterwert 5b in den unteren Displaybereich 2b überführt und kleiner als ursprünglich dargestellt. Schließlich wird der dritte Wert 7b vom unteren Displaybereich 2b in den oberen Displaybereich 2a übertragen. Dasselbe gilt für die namentlich auf dem Display wiedergegebenen Größen ,Vorgabe' 4a, ,Temperatur' 5a und 'Nachtabsenkung' 7a. Das Ergebnis dieses zyklischen Vertauschens ist in Figur 4 gezeigt. In diesem Betriebszustand kann nun der mittig im Display 2 dargestellte Wert 4b der zweiten Größe 4a verändert werden, wie dies die Navigationssymbole 6 anzeigen. Dies kann durch ein Drücken des als Navigationstaster ausgebildeten Bedienelements 3 nach oben oder nach unten erfolgen.

Wird das Bedienelement 3 erneut betätigt, insbesondere der mittig in dem Navigationstaster 3 angeordnete Bedienknopf "OK" gedrückt, werden die drei im Display 2 angezeigten Größen 4a, 5a, 7a respektive ihre Werte 4b, 5b, 7b erneut zyklisch vertauscht, wobei nunmehr der Wert 7b 'aktiviert' der dritten Größe 7a 'Nachtabsenkung' gegenüber den anderen beiden Größen 4a, 5a in etwa der Mitte des Displays 2 vergrößert im Verhältnis zu diesen dargestellt wird. In dieser Einstellung kann der Anwender mit dem Navigationstaster 3 auswählen, ob die Nachtabsenkung aktiviert oder deaktiviert werden soll.

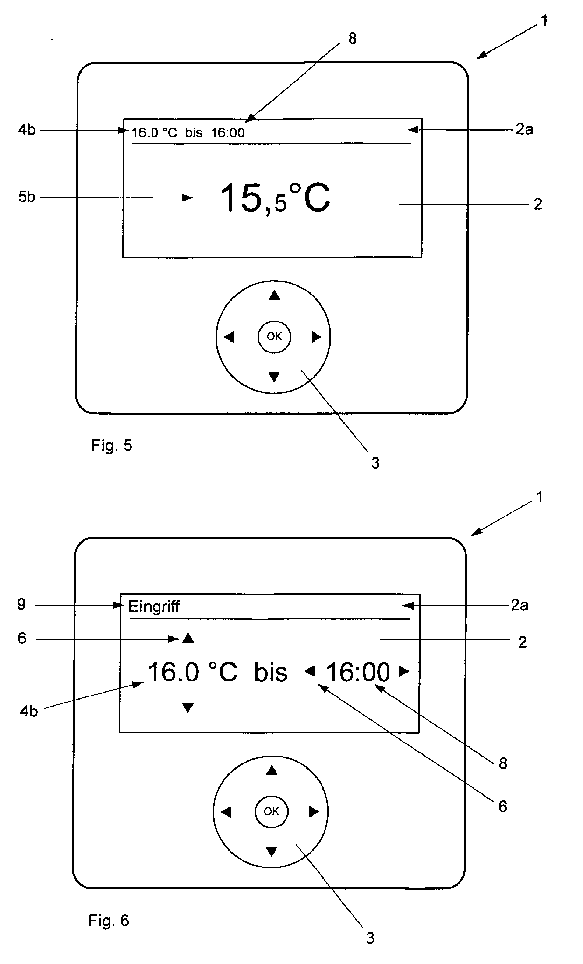

Figur 5 zeigt eine Bedieneinheit 1, die dazu eingerichtet ist, neben einem Wert 4b einer ersten Größe, hier eine Solltemperatur, einen Wert 8 einer zweiten Größe, hier einen Zeitraum, anzuzeigen, wobei nach Betätigung des Bedienelements 3 beide Werte 4b, 8 vergrößert dargestellt sind. Dabei wechseln nicht nur die Größenverhältnisse der beiden Werte 4b, 8 gegenüber ihren jeweiligen vorherigen Abmessungen. Zusätzlich werden sie nach der Betätigung des Bedienelements 3 auch beide nebeneinander in etwa der horizontalen und vertikalen Mitte der Anzeige 2 dargestellt, so dass ein Positionswechsel von einem Randbereich 2a der Anzeige 2 zu ihrer Mitte hin ebenfalls stattfindet. Figur 6 zeigt die durch die Betätigung bewirkte Änderung der Anzeige 2.

Weiterhin wird ein Wert 5b einer zweiten Größe, die in diesem Ausführungsbeispiel gemäß Figur 5 im Vergleich zu Figuren 1 bis 4 nicht namentlich auf dem Display 2 angezeigt ist, in Gestalt eines Temperaturistwerts in seinen Abmessungen im Verhältnis zum ersten Wert 4b zunächst vergrößert dargestellt, siehe Figur 5, wobei durch die Betätigung des Bedienelements 3 der Wert 5b der zweiten Größe verschwindet, bzw. durch einen textlichen Hinweis "Eingriff' ersetzt wird, die nunmehr an der Stelle angezeigt ist, an der ursprünglich die Werte der ersten und der weiteren Größe angezeigt wurden, siehe Figur 6. Der Hinweis "Eingriff' gibt in Figur 6 einen Status des Bediengeräts, d.h. seine Eingabebereitschaft an.

Erfolgt nach der Betätigung des Bedienelements 3 bei den Ausführungsvarianten gemäß Figuren 2, 4 und 6 keine weitere Betätigung des Bedienelements für eine vorbestimmte Zeitspanne, beispielsweise für 20 oder 30 Sekunden, wechselt die Bedieneinheit wieder in ihren "Stand-By-Betrieb" gemäß der Figuren 1, 3 und 5, wobei die Bedieneinheit wieder als Raumtemperaturanzeige fungiert.

## Patentansprüche

1. Bedieneinheit (1) zur Steuerung eines Gerätes, einer Anlage und/ oder eines Prozesses in der Gebäudeautomation, mit einem Bedienelement (3) und mit einer Anzeige (2), auf der ein Wert (4b) einer ersten Größe (4a) dargestellt ist, **dadurch gekennzeichnet, dass** die Bedieneinheit (1) dazu eingerichtet ist, durch eine Betätigung des Bedienelements (3) die Darstellung des Werts (4b) der ersten Größe (4a) zu vergrößern.

2. Bedieneinheit (1) nach Anspruch 1, **dadurch gekennzeichnet, dass** auf der Bedieneinheit (1) ein Wert (5b) einer zweiten Größe (5a) dargestellt ist, wobei die Bedieneinheit (1) dazu eingerichtet ist, durch die Betätigung des Bedienelements (3) die Darstellung des Werts (5b) der zweiten Größe (5a) zu verkleinern.

3. Bedieneinheit (1) nach Anspruch 2, **dadurch gekennzeichnet, dass** der Wert (5b) der zweiten Größe (5a) in seinen Abmessungen im Verhältnis zum ersten Wert (4b) vergrößert dargestellt ist, wobei die Bedieneinheit (1) dazu eingerichtet ist, durch die Betätigung des Bedienelements (3) die Größenverhältnisse der beiden Werte (4b, 5b) zu vertauschen.

4. Bedieneinheit (1) nach Anspruch 1, **dadurch gekennzeichnet, dass** auf der Bedieneinheit (1) ein Wert (5b) einer zweiten Größe (5a) dargestellt ist, wobei die Bedieneinheit (1) derart eingerichtet ist, dass durch die Betätigung des Bedienelements (3) der Wert (5b) der zweiten Größe (5a) verschwindet.

5. Bedieneinheit (1) nach einem der vorherigen Ansprüche, **dadurch gekennzeichnet, dass** sie derart eingerichtet ist, dass durch die Betätigung des Bedienelements (3) ein Wert (9) einer dritten Größe auf der Bedieneinheit erscheint, der im Verhältnis zum Wert (4b) der ersten Größe (4a) kleiner dargestellt ist.

6. Bedieneinheit (1) nach einem der vorherigen Ansprüche, **dadurch gekennzeichnet, dass** die Darstellung des Werts (5b) der zweiten Größe (5a) vor der Betätigung des Bedienelements (3) die 1,2-fache bis 4-fache Abmessung der Darstellung des Werts (4b) der ersten Größe (4a) aufweist.

7. Bedieneinheit (1) nach einem der vorherigen Ansprüche, **dadurch gekennzeichnet, dass** die Werte (4b, 5b) gemeinsam auf einem Display (2) dargestellt sind.

8. Bedieneinheit (1) nach einem der vorherigen Ansprüche, **dadurch gekennzeichnet, dass** der Wert (4b) der ersten Größe (4a) nach der Betätigung des Bedienelements (3) in etwa in der Mitte der Anzeige (2) positioniert ist.

9. Bedieneinheit (1) nach Anspruch 8, **dadurch gekennzeichnet, dass** sie dazu eingerichtet ist, den Wert (4b) der ersten Größe (4a) durch Betätigung des Bedienelements (3) von einer Positionierung am Rand (2a, 2b) der Anzeige (2) zu der Positionierung in etwa in der Mitte der Anzeige (2) zu wechseln.

10. Bedieneinheit (1) nach einem der Ansprüche 2 bis 9, **dadurch gekennzeichnet, dass** sie dazu eingerichtet ist, die Positionierung der Werte (4b, 5b, 7b) durch Betätigung des Bedienelements (3) zu tauschen.

11. Bedieneinheit (1) nach einem der vorherigen Ansprüche, **dadurch gekennzeichnet, dass** die dargestellten Werte (4b, 5b, 7b) die physikalische Einheit der jeweiligen Größe umfassen.

12. Bedieneinheit (1) nach einem der vorherigen Ansprüche, **dadurch gekennzeichnet, dass** die zweite Größe (5a) ein Messwert ist.

13. Bedieneinheit (1) nach einem der Ansprüche 2 bis 12, **dadurch gekennzeichnet, dass** die zweite Größe (5a) ein Istwert innerhalb einer Regelung ist.

14. Bedieneinheit nach einem der vorherigen Ansprüche, **dadurch gekennzeichnet, dass** die erste Größe (4a) und/ oder die dritte Größe ein veränderbarer Parameter eines Steuerprogramms ist.

15. Bedieneinheit (1) nach einem der vorherigen Ansprüche 13 oder 14, **dadurch gekennzeichnet, dass** die erste Größe (4a) ein vorgebbarer Sollwert für die Regelung ist.

16. Bedieneinheit (1) nach einem der vorherigen Ansprüche 2 bis 15, **dadurch gekennzeichnet, dass** die zweite Größe (5a) ein gemessener Temperaturistwert und die erste Größe (4a) ein vorgebbarer Temperatursollwert innerhalb einer Raumtemperaturregelung ist.

17. Bedieneinheit (1) nach einem der vorherigen Ansprüche, **dadurch gekennzeichnet, dass** sie ein Raumthermostat für eine Raumtemperaturregelung ist.

18. Bedieneinheit (1) nach einem der vorherigen Ansprüche, **gekennzeichnet durch** einen Speicher, in dem ein parametrierbares Steuerprogramm gespeichert ist und einen Mikroprozessor zur Ausführung des Steuerprogramms.

19. Bedieneinheit (1) nach einem der vorherigen Ansprüche, **dadurch gekennzeichnet, dass** sie dazu eingerichtet ist, nach einer vorbestimmten Zeit der Nichtbedienung des Bedienelements (3) die durch die Betätigung des Bedienelements (3) bewirkten Änderungen auf der Anzeige (2) zurückwechseln zu lassen.

20. Bedieneinheit (1) nach einem der vorherigen Ansprüche, **dadurch gekennzeichnet, dass** die Werte (4b, 5b) in numerischen Zahlenwerten dargestellt sind.

21. Bedieneinheit (1) nach einem der vorherigen Ansprüche, **dadurch gekennzeichnet, dass** auf der Bedieneinheit (1) ein Wert (7b) einer weiteren Größe (7a) dargestellt ist, wobei die Bedieneinheit dazu eingerichtet ist, durch eine Betätigung des Bedienelements (3) die Größenverhältnisse und/ oder Positionen der drei Werte (4b, 5b, 7b) zyklisch zu vertauschen.

22. Bedieneinheit (1) nach einem der vorherigen Ansprüche, **dadurch gekennzeichnet, dass** sie dazu eingerichtet ist, durch die Betätigung des Bedienelements (3) eine Beleuchtung der Anzeige (2) einzuschalten.

23. Bedieneinheit (1) nach einem der vorherigen Ansprüche, **dadurch gekennzeichnet, dass** sie dazu eingerichtet ist, durch eine erste Betätigung des Bedienelements (3) eine Beleuchtung der Anzeige (2) einzuschalten und durch eine weitere Betätigung des Bedienelements (3) eine Änderung des oder der angezeigten Werte (4b, 5b, 7b, 9) der Größen (4a, 5a, 7a) nach einem der vorherigen Ansprüche zu bewirken.

24. Bedieneinheit (1) nach einem der vorherigen Ansprüche, **dadurch gekennzeichnet, dass** auf der Bedieneinheit (1) ein Wert (8) einer weiteren Größe dargestellt ist, wobei die Bedieneinheit dazu eingerichtet ist, durch eine Betätigung des Bedienelements (3) die Darstellung des Werts (8) der weiteren Größe zu vergrößern.

25. Bedieneinheit (1) nach Anspruch 24, **dadurch gekennzeichnet, dass** der Wert (8) der weiteren Größe nach der Betätigung des Bedienelements (3) in etwa in der Mitte der Anzeige (2) neben dem Wert (4b) der ersten Größe (4a) positioniert ist.
